# EUROPEAN PATENT APPLICATION

(11) **EP 4 670 479 A1**
(43) Date of publication of application: **31.12.2025**
(21) Application number: 25169359.4
(22) Date of filing: 09.04.2025
(51) Int. Cl.: A01B 76/00, A01D 41/127, A01D 41/14

(54) **SYSTEM AND METHOD FOR INCREASED YIELD MAP RESOLUTION FOR HARVESTING MACHINES**

(30) Priority: 28.06.2024 US 202463665348 P
(71) Applicant: Agco Corporation, Duluth, Georgia 30096 (US)
(72) Inventor: KOCH, Jared, Hesston, 67062 (US); Naryal, Manish, Hesston (US)
(74) Representative: AGCO Intellectual Property Department

(57) **Abstract**

A method for augmenting crop yield information with crop height information includes receiving in a processing unit crop height signals from a sensor that senses a height of a crop to be harvested by an agricultural machine and generates the crop height signals; determining with the processing unit a height of the crop based on the crop height signals; receiving in the processing unit location information of the agricultural machine; and generating with the processing unit geo-located crop height information that represents the height of the crop and the location information.

## Description

### BACKGROUND OF THE INVENTION

Crop yield maps are graphical representations of the productivity levels of different areas within agricultural fields. These maps provide valuable information about the variations in crop yields across fields, helping farmers and agronomists understand the spatial distribution of crop performance.

Crop yield maps are typically created using remote sensing technologies such as satellite imagery or drones or with yield monitoring systems installed on harvesting machinery. These technologies collect data on crop health, biomass, or yield at regular intervals throughout the growing season and then process and display the data. Variations in crop yields are often shown with color gradients or contour lines, with different shades or elevations representing different yield levels.

By analyzing crop yield maps, farmers and agronomists can identify areas of fields that consistently produce high or low yields. This information can be used to make informed decisions on variable rate applications of fertilizers, pesticides, or irrigation, tailoring these inputs to the specific needs of different areas within the fields. Yield maps also help in identifying factors that may be limiting crop productivity, such as soil variability, drainage issues, or pest infestations. Crop yield maps can also be used to evaluate the effectiveness of different management practices or treatments applied to fields. By comparing yield maps from different years or different sections of a field, farmers can assess the impact of changes in planting techniques, crop varieties, or input use on overall productivity.

Unfortunately, current methods of creating crop yield maps suffer from several limitations. For example, crop yield maps created from satellite imagery and/or drones often lack resolution. Even crop maps created from equipment installed on harvesting machinery often lacks resolution, especially as the size of harvesters and therefore the monitored areas increase. Moreover, current crop yield maps typically just show representations of crop productivity but don't identify why some areas have higher or lower productivity than other areas. Farmers therefore often have to guess as to why some areas are underperforming or conduct additional time-consuming investigations. Imprecise crop yield maps can also encourage wasteful overwatering or excess fertilization.

### SUMMARY OF THE INVENTION

The current invention addresses one or more of the above-mentioned problems and provides a distinct advance in the art of crop yield maps. More particularly, embodiments of the invention provide more effective methods and systems for creating and displaying improved crop yield maps and other agricultural information.

One embodiment of the invention is a method for augmenting crop yield information with crop height information. The method comprises receiving in a processing unit crop height signals from a sensor that senses a height of a crop to be harvested by an agricultural machine and determining a height of the crop based on the crop height signals. The method further comprises receiving in the processing unit location information for locations of the agricultural machine as it operates in an agricultural field. The method further comprises generating geo-located crop height information that represents the height of the crop at different locations in the field. In some embodiments, the geo-located crop height information includes a crop height map that represents the height of the crop at different locations in the field.

Embodiments of the method may further comprise receiving in the processing unit a crop yield map that represents crop yields at different locations in the field and displaying the crop yield map alongside the crop height map. In some embodiments, the crop height map may be superimposed over at least a portion of the crop yield map so that an operator can compare displayed crop yield data and crop height data for the same geographic areas in the field. By viewing crop height data alongside crop yield data, farmers or agronomists can gain a better understanding of yield variability. For example, an area of low crop yield my coincide with an area of short crop height, which may indicate late planting, planting skips, or other causes not completely related to poor soil quality or low irrigation.

Embodiments of the invention may further comprise predicting, with the processing unit, causes of crop yield variation in the field based on the crop height information, the location information, and the crop yield map. Representations of these causes may then be displayed over at least a portion of the crop yield map. For example, the processing unit, and/or a remote computing device, may predict presence of a pond, wheel tracks, or a road based on collected data and display a representation of the predicted item on the map so a farmer or other person knows the predicted cause of crop yield variability.

Embodiments of the invention may be implemented on or with a combine harvester or other agricultural machine having a number of sensors for sensing crops in front of the machine and a processing unit for determining crop height based on signals or information from the sensors. The sensors may include ultrasound sensors, lidar sensors, radar sensors, contact sensors, or combinations of these sensors. An exemplary combine harvester on which embodiments of the invention may be implemented includes a harvesting header on its front end. The header carries a cutting mechanism, a rotatable reel, and an auger that together cut and gather crop. The reel has a plurality of rotatable tines or fingers to guide the standing crop into the header. In some embodiments, the reel has a plurality of independently movable reel sections, each with a plurality of rotatable tines. The crop height sensors may be mounted on or adjacent the rotatable tines.

This summary is provided to introduce a selection of concepts in a simplified form that are further described below in the detailed description. This summary is not intended to identify key features or essential features of the claimed subject matter, nor is it intended to be used to limit the scope of the claimed subject matter. Other aspects and advantages of the current invention will be apparent from the following detailed description of the embodiments and the accompanying drawing figures.

### BRIEF DESCRIPTION OF DRAWING FIGURES

Embodiments of the current invention are described in detail below with reference to the attached drawing figures, wherein:
Fig. 1 is front perspective view of an exemplary combine harvester on which embodiments of the present invention may be implemented.
Fig. 2 is a fragmentary perspective view of a header of the combine harvester.
Fig. 3 is a front elevational view of the header.
Fig. 4 is a fragmentary side view of the header.
Fig. 5 is a block diagram of selected components of a reel height control system in accordance with embodiments of the invention.
Fig. 6 is a block diagram of an exemplary controller used in the reel height control system of Fig. 5.
Fig. 7 is a schematic diagram of external computer and communications equipment that may implement aspects of the present invention.
Fig. 8 is flow diagram that illustrates selected steps in computer-implemented methods of the present invention and/or portions of computer programs of the invention.
Fig. 9 are exemplary crop yield maps, crop height maps, and other data maps that may be created and displayed by embodiments of the invention.

The drawing figures do not limit the current invention to the specific embodiments disclosed and described herein. The drawings are not necessarily to scale, emphasis instead being placed upon clearly illustrating the principles of the invention.

### DESCRIPTION OF THE INVENTION

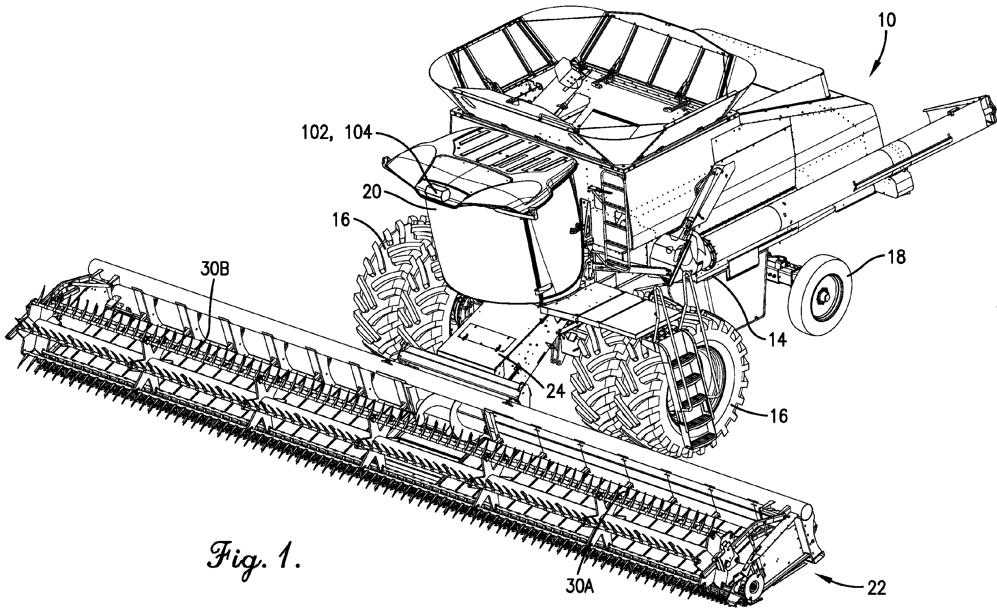

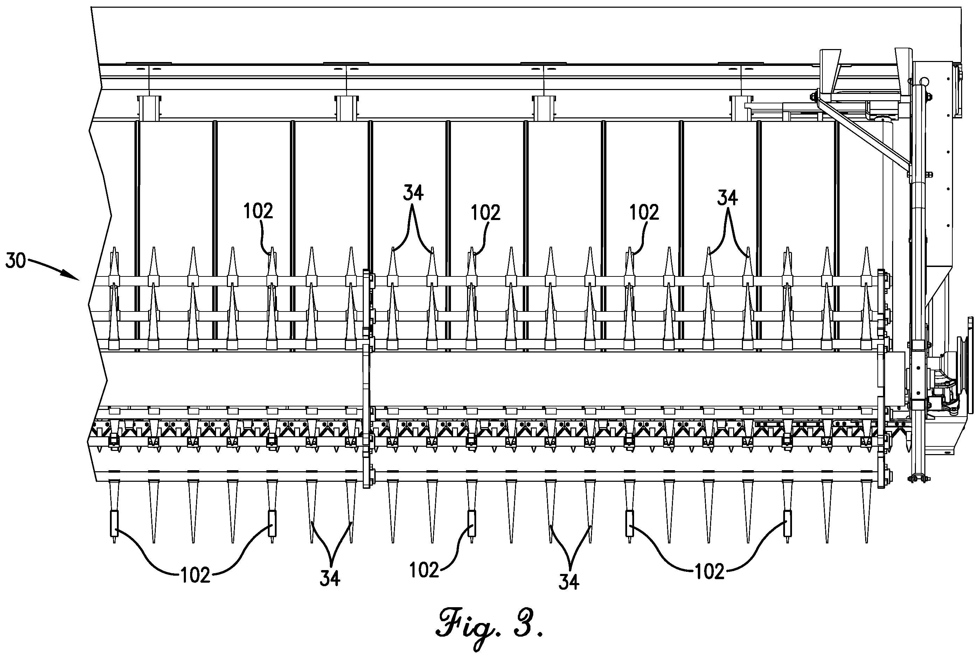

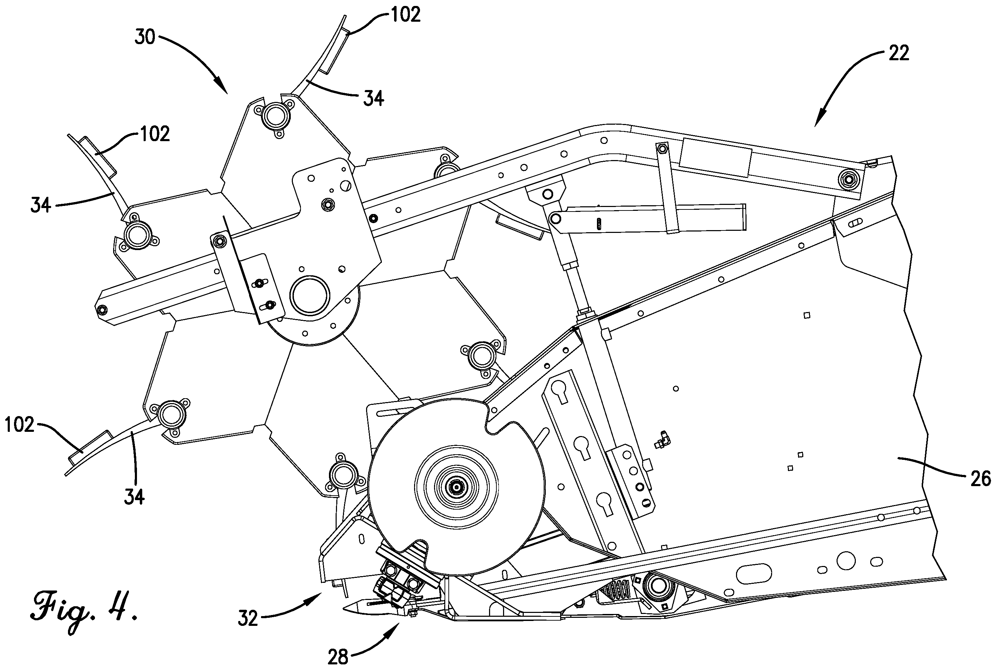

The present invention provides more effective methods and systems for creating and displaying crop yield maps, crop height information, and other agricultural information. The invention may be implemented on or with any agricultural machine, machine control system, and/or remote data gathering and processing system. An exemplary agricultural machine 10 on which certain embodiments of the invention may be implemented is illustrated in Figs 1 - 4. The illustrated machine 10 is a combine harvester, but embodiments of the invention may be used with other agricultural machines or configurations of machines, including windrowers, tractors, and balers without departing from the scope of the invention.

The exemplary combine harvester 10 includes a chassis or frame 14 supported by a pair of front drive wheels 16 and a pair of rear wheels 18. In some embodiments, the wheels may be replaced with tracks. In some embodiments, the frame 14 supports a cab 20, within which an operator may control operation of the combine harvester 10. In other embodiments, the harvester may be remotely or autonomously controlled without an onboard operator.

The exemplary combine harvester 10 includes a harvesting header 22 on its front end that delivers collected crop materials to a feeder house 24 where they are moved upwardly and rearwardly by a conveyor until reaching a beater. The beater feeds the material upwardly and rearwardly to a to a rotor having an infeed auger on the front end thereof. The auger, in turn, advances the materials to thresher and separator mechanisms which thresh the crop to separate the grain therefrom and then eject straw residue either directly onto the ground in a windrow or via a straw chopper. As the construction and operation of a combine harvester 10 are known, further discussion of the same is omitted here for brevity.

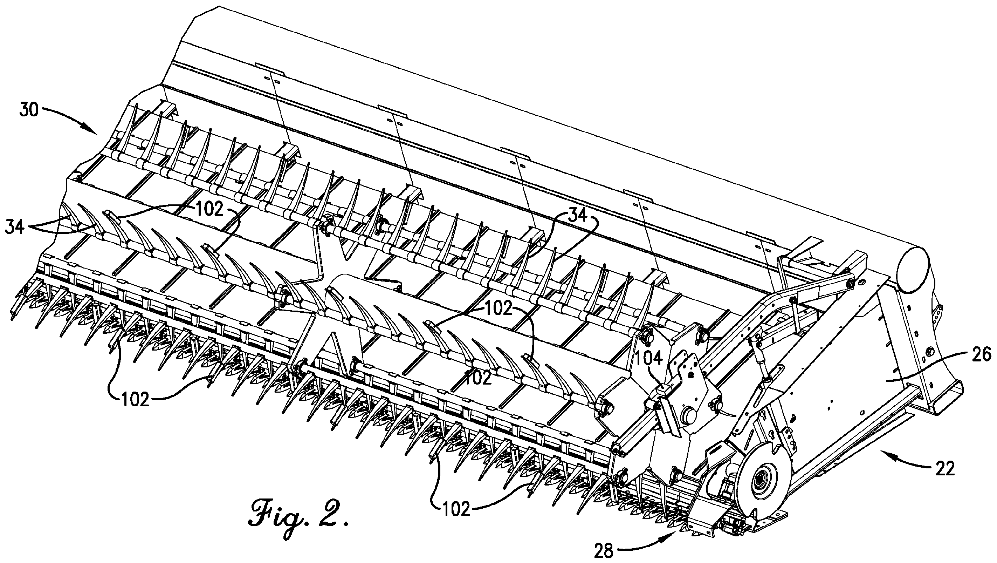

Specifics of the header 22 important to embodiments of the invention will now be discussed in more detail with reference to Figs 2-4. The exemplary header 22 includes a header frame 26 that is suitably supported and attached on the combine such that the header can be moved forwardly across the ground to cut a standing crop. The frame carries a cutting mechanism 28, a rotatable reel 30, and an auger 32 that together cut and gather crop. The cutting mechanism, often a sickle bar or a disc cutter, slices through the crop at the desired height.

The reel 30 has a plurality of rotatable tines 34 or fingers to guide the standing crop into the header. In some embodiments, the reel has a plurality of independently movable reel sections, each with a plurality of rotatable tines. Two such independently movable reel sections 30A, 30B are shown in Fig. 1, but the machine may have any number of reel sections. Each reel section can be rotated, raised, lowered, and otherwise operated independently of the other reel sections and/or operated in unison with the other reel sections.

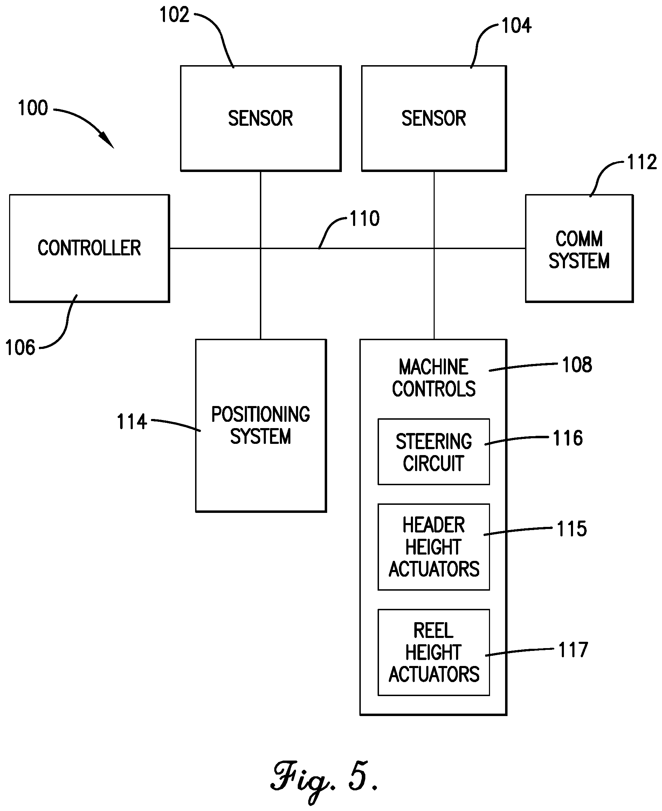

The combine harvester 10 may also be equipped with a header height control system to adjust the header's height above the ground. The header height control system includes conventional sensors, actuators, and controls that are well known and therefore not described in detail herein. The header height control system can be adjusted manually or automatically. For example, it may operate to sense ground surfaces directly in front of the combine harvester's path of travel and automatically position the header a preselected distance above the ground surface so as to follow bumps, ridges, and other contours of the ground surface and to cut crops at about the same distance above these ground surfaces. Components of the header height control system are represented in the machine controls 112 shown in Fig. 5.

The combine harvester may also be equipped with a reel height control system to adjust the reel's height relative to the remainder of the header reel. The reel height control system detects the height of crop to be harvested by the harvester and adjusts the height of the reel so as to follow the height of the crop canopy in front of the harvester and not just follow the height of the header. Components of the reel height control system are also represented in the machine controls 112.

In accordance with aspects of the present invention, the harvester is also equipped with a system 100 for creating and displaying crop yield maps, crop height information, and other agricultural information. An embodiment of the system 100 is shown in Fig. 5 and comprises a plurality of sensors 102, 104, a controller 106, and a network 110 for transferring signals from the sensors 102, 104 to the controller 106. The system 100 illustrated and described herein is merely illustrative of one embodiment among others. Some embodiments of the invention may include additional control devices or features or fewer or different control devices or features. Moreover, components of the system 100 may also implement other functions of the combine harvester.

The sensors 102, 104 may be any devices that can sense crop canopy height in front of the combine harvester. In one embodiment, the sensors include one or more ultrasound sensors, lidar sensors, radar sensors, or combinations of these sensors. These sensors may be mounted on top of the cab as depicted in Fig. 1 or anywhere else on the harvester that provides a sensor field of view in front of the harvester. The sensors gather distance measurements to solid surfaces, including crop canopies and ground surfaces, in front of the harvester and provide corresponding data to the controller 106 and/or other processing circuits which determine the height of the crop canopy in front of the harvester. The outputs of these sensors are provided over the network 110 to the controller 106 in the form of a coordinate system based on incident angle and distance values relative to the sensors. The mounting angle of the sensors on the combine harvester and the pitch of the combine harvester 10 influence how these values translate into a plane coordinate system in front of the combine harvester 10. More details of these types of sensors and their operation are described in U.S. Patent No. 10,670,708, which is incorporated herein by reference in its entirety.

In other embodiments, the sensors 102, 104 may be contact sensors that detect physical contact between the reel and a crop being harvested by the machine and that generate corresponding crop contact signals. The contact sensors detect physical contact with a crop being harvested by the machine and generate corresponding crop contact signals. The contact sensors may be mounted on any part of the machine.

In one embodiment shown in Figs 2-4, contact sensors 102 are shown mounted to some of the rotatable tines 34 of the reel 30 to detect deflection of the tines caused by contact with the crop. In embodiments of the combine with several independently movable reel sections, at least one of the contact sensors 102 is mounted to at least one tine on each of the independently movable reel sections so the sensors detect physical contact with the crop in front of all of the reel sections. For example, if the reel has six independently moveable reel sections, at least six contact sensors 102 are installed on the machine, with at least one contact sensor mounted on one of the tines of each reel section. In some embodiments, a contact sensor is mounted to more than one tine in each reel section for greater resolution. In some embodiments, contact sensors 102 are mounted on every tine of the reel.

The contact sensors 102 may employ any sensor technologies that can detect physical contract with crops in front of the harvester. In one embodiment, the contact sensors are hall effect tactile sensors such as the flexible hall effect tactile sensors provided by Reichardt Elektronik GmbH.

Because the tines 34 on which the contact sensors 102 are mounted rotate about the axis of the reel, the rotational positions of the sensors 102 when they first contract the crop canopy must be detected in order to detect the height of the crop canopy. Thus, in embodiments in which the contact sensors are mounted to the rotatable tines, the system also comprises at least one position sensor 104 shown in Fig. 2 mounted on the header near the central axis of the reel. The position sensor 104 may be an optical position sensor that senses angular positions of the contact sensors 102 when the contact sensors 102 detect physical contact with the crop and that generates corresponding angular position signals.

The controller 106 receives the sensor signals and determines a canopy height of the crop based on these signals. For example, in embodiments in which the sensors are contact sensors and position sensors, the controller receives the associated crop contact signals and the angular position signals and determines the height of the crop to be harvested based on these signals. Importantly, because the contact sensors detect physical contact with the crop as the crop enters the agricultural machine, they generate signals that are representative of the height of crop immediately in front of the machine. Moreover, because each contact sensor detects contact with a crop at a particular location on the machine, the height of crop in specific and different areas in front of the machine can be detected.

Once the controller 106 has determined the height of the crop, it creates and displays crop height maps and/or other representations of crop height as discussed in more detail below. The controller may also send instructions to the machine controls 108 to position the reel. In embodiments in which the machine has several independently moveable reel sections, each reel section may be raised, lowered, or otherwise positioned under the direction of the controller 106.

The data exchange network 110 transfers signals from the sensors 102, 104 to the controller 106 and transfers data and signals from the controller 106 to the machine controls 108. The network 110 also transfers data and signals from and to other control components on the combine harvester such as the communication system 112, positioning system 114, and/or other devices. The network 110 may be a CAN network or any other network or data transmission path.

The machine controls 108 collectively represent the various actuators, sensors, motors, and/or controlled devices residing on the combine harvester 10 to raise, lower, or otherwise position the header and the reel and to enable navigational or operational functionality of the combine. For example, as shown, the machine controls include the actuators, motors, pumps, or other devices 115 that raise and lower the header. The machine controls also include the actuators, motors, pumps, or other devices 117 that raise and lower the reel relative to the header. The machine controls 112 may further include a steering circuit 116, which includes hydraulic pumps, motors, control valves, etc. for enabling automatic/guided or manual steering of the combine harvester 10. For guided steering, the control software may be implemented in the controller 104 or remotely.

The positioning system 114 may include a global navigation satellite system (GNSS) receiver, a global positioning system or GPS, geographic information system (GIS), etc. and enables the detection of a geofence or mapped areas, as well the detection of vehicle positioning, speed, and/or location of the combine harvester 10. Other components such as a user interface may also exchange data with other components via the network 108.

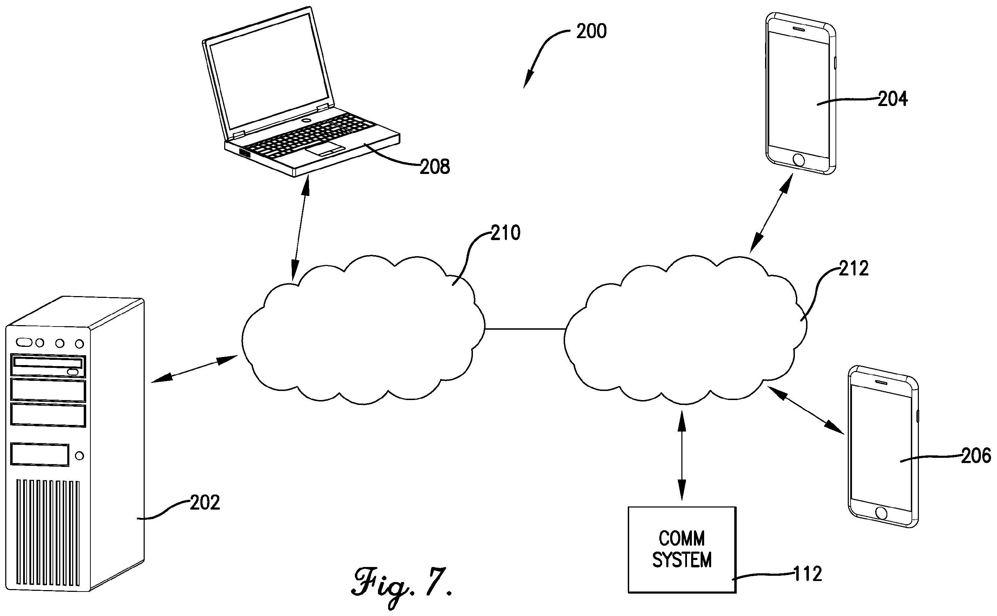

The communication system 112 transmits data to, and receives data from, one or more devices located external to the combine harvester 10. For example, the system 100 may exchange data with external computing equipment 200 depicted in Fig. 7. In some embodiments, the communication system 112 may access, from remote storage, crop yield maps, topology maps, or other maps or data that may be useful to the guidance of the combine harvester 10 across the field and/or the accuracy of detecting the height of the crop canopy. The communication system 112 may comprise any known communications equipment such a radio and/or cellular transceiver or modem.

The external computing equipment may include a computer server system 202; one or more personal computing devices 204, 206, 208; and a communications network 210.The computer server system 202, also referred to herein as a "remote server", receives, stores, and provides access to the data and information described herein and implements one or more computer programs for performing at least some of the functions described herein. The computer server system 202 also provides a web-based portal that can be accessed by the personal computing devices 204, 206, 208 and other devices.

Embodiments of the computer server system 202 may include one or more servers running any operating software systems and the computer programs described herein and includes a processor or processor element, memory elements, and a communications element. The server computer also includes other hardware, firmware, and software and may have access to processing elements, computer memory, and other hardware and software on other computers for receiving, storing, accessing, and transmitting data and information as described herein. The computer server system 202 also includes or has access to conventional web hosting operating software, searching algorithms, and an Internet connection and is assigned a URL and corresponding domain name so that it can be accessed via the Internet or any other communications network in a conventional manner.

The processor of the computer server system 202, also referred to herein as a "processing element", may include any number of processors, microprocessors, microcontrollers, DSPs, field-programmable gate arrays (FPGAs), analog and/or digital application-specific integrated circuits (ASICs), or the like, or combinations thereof. The processing element may generally execute, process, or run instructions, code, code segments, software, firmware, programs, applications, apps, processes, services, daemons, or the like. The processing element may also include hardware components, such as finite-state machines, sequential and combinational logic, and other electronic circuits that may perform the functions necessary for the operation of embodiments of the current inventive concept. The processing element may be in communication with the other electronic components through serial or parallel links that include address busses, data busses, control lines, and the like.

The memory elements of the computer server system 202 may include data storage components such as read-only memory (ROM), programmable ROM, erasable programmable ROM, random-access memory (RAM) such as static RAM (SRAM) or dynamic RAM (DRAM), cache memory, hard disks, floppy disks, optical disks, flash memory, thumb drives, USB ports, or the like, or combinations thereof. The memory elements may include, or may constitute, a "computer-readable medium." The memory elements may store the instructions, code, code segments, software, firmware, programs, applications, apps, services, daemons, or the like that are executed by the processing elements. The memory elements may also store settings, data, documents, sound files, photographs, movies, images, databases, and the like.

The personal computing devices 204, 206, 208 may be any devices used by farmers, agronomists, or other users of the present invention. The personal computing devices, also referred to herein as "mobile computing devices", are preferably smart mobile phones such as those provided by Apple but may also be smart watches, laptop computers, tablet computers, or similar electronic devices. Each of the devices 204, 206, 208 includes a processor or processing elements, memory or memory elements, a transceiver or other communications element, and an Internet browser that can access a conventional Internet connection such as a wireless broadband connection, DSL converter, or ISDN converter to exchange data with the computer server system 12 via the communications network 20. The personal computing devices also include GPS receivers and mapping capabilities to determine and display their current locations and locations of agricultural fields and other areas.

The mobile electronic devices also include displays which may include video devices of the following types: plasma, light-emitting diode (LED),organic LED (OLED), Light Emitting Polymer (LEP) or Polymer LED (PLED), liquid crystal display (LCD), thin film transistor (TFT) LCD, LED side-lit or back-lit LCD, or the like, or combinations thereof. In various embodiments, the displays may also include a touch screen occupying the entire screen or a portion thereof so that the display functions as part of a user interface. The touch screen may allow the user to interact with the mobile electronic device by physically touching, swiping, or gesturing on areas of the screen.

The communications network 210 provides communications and data transfer between the server system 202; the comm system 112; the personal computing devices 204, 206, 208; and/or other devices and may be the Internet or any other communications network such as a local area network, a wide area network, or an intranet. The communications network 210 may include or be in communication with a wireless network 212 capable of supporting wireless communications such as the wireless networks operated by AT&T, Verizon, or T-Mobile. The wireless network 212 may include conventional switching and routing equipment. The communications network 210 and wireless network 212 may also be combined or implemented with several different networks.

The components of the external computing equipment 200 illustrated and described herein are merely examples of computer equipment and software that may be used to implement embodiments of the present invention and may be replaced with other equipment without departing from the scope of the present invention. Some of the illustrated components of the system 10 may also be combined.

Embodiments of the present invention may also comprise one or more computer programs stored in or on computer-readable medium residing on or accessible by the controller 106, the computer server system 202 and/or the personal computing devices 204, 206, 208. The computer programs may comprise listings of executable instructions for implementing logical functions in the computers and can be embodied in any non-transitory computer-readable medium for use by or in connection with an instruction execution system, apparatus, or device, such as a computer-based system, processor-containing system, or other system that can fetch the instructions from the instruction execution system, apparatus, or device, and execute the instructions. In the context of this application, a "computer-readable medium" can be any non-transitory means that can contain, store, or communicate the programs. The computer-readable medium can be, for example, but not limited to, an electronic, magnetic, optical, electromagnetic, infrared, or semi-conductor system, apparatus, or device. More specific, although not inclusive, examples of the computer-readable medium would include the following: an electrical connection having one or more wires, a portable computer diskette, a random access memory (RAM), a read-only memory (ROM), an erasable, programmable, read-only memory (EPROM or Flash memory), an optical fiber, and a portable compact disk read-only memory (CDROM).

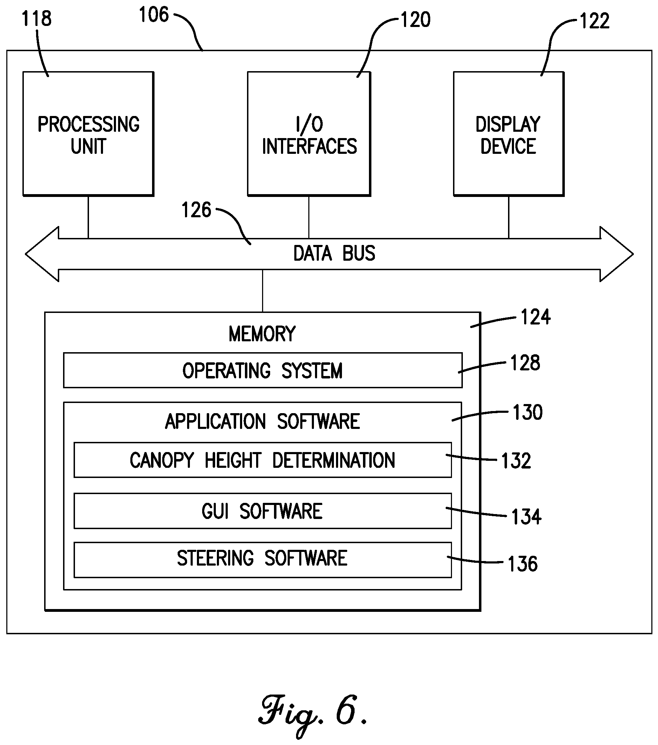

Fig. 6 illustrates an exemplary embodiment of the controller 106. The illustrated controller 106 is just one example of a device that may implement aspects of the present invention and may be replaced with another device and/or may have fewer or additional components than those illustrated. Moreover, some of the functionality associated with the various components depicted in Fig. 6 may be combined or distributed among additional modules or devices, including the external computing equipment 20.

The controller 106 may comprise any processing device or circuitry such as a processing unit 118, which may be a processor or any other logic device. The controller may also comprise input/output (I/O) interface(s) 120, a display device 122, and memory 124, all coupled to one or more data busses, such as data bus 126.

The memory 124 may include any one or a combination of volatile memory elements (e.g., random-access memory RAM, such as DRAM, and SRAM, etc.) and nonvolatile memory elements (e.g., ROM, hard drive, tape, CDROM, etc.). The memory 124 may store a native operating system 128 and one or more native applications, emulation systems, or emulated applications for any of a variety of operating systems and/or emulated hardware platforms, emulated operating systems, etc. In the embodiment depicted in Fig 6, the memory 124 stores or otherwise accesses the operating system 128 and application software 130.

The application software 130 comprises, in one embodiment, crop canopy height determination software 132, graphical user interface (GUI) software 134, and steering software 136. In some embodiments, functionality of one or more of these software modules may be combined into a single software module, or further distributed according to additional modules in the memory 124 or other memory. In some embodiments, functionality for one or more of the software modules may be stored remotely. In some embodiments, a separate storage device (e.g., a non-transitory, computer readable storage medium) may be coupled to the data bus 126 (or the network 108), such as a persistent memory (e.g., optical, magnetic, and/or semiconductor memory and associated drives).

The crop canopy height determination software 132 receives data from the sensors 102, 104 and determines the height of the crop canopy in front of the combine based on the received signals. The software 132 or similar software then creates the crop height maps, geo-located crop height information, and other data and information described herein. The software may use any known algorithms for performing these calculations. For example, in one embodiment, the software monitors the sensor signals from the contact sensors 102 and the position sensor 104. When multiple contact sensors across the length of the reel detect contact with crop, the software determines the angle of the sensors from a reference horizontal plane from sensor signals received from the position sensor to determine the height of the sensors and thus the height of the crop. The software then obtains location information from the positioning system 114 and creates the geo-located crop height information and crop height maps.

In some embodiments, the steering software 136 receives the crop canopy height data and other data and provides steering commands to the machine controls 112.

The GUI software 134 provides feedback, alerts, and/or recommendations to an operator based on data received from the network 108 and/or from the software modules of the application software 130. The GUI software may also assist with creation of displays for the geo-located crop information and crop height maps.

Execution of the software modules is implemented by the processing unit 118 under the management of the operating system 128. In some embodiments, the operating system 128 may be omitted and a more rudimentary manner of control implemented. The processing unit 118 may be embodied as a custom-made or commercially available processor, a central processing unit (CPU) or an auxiliary processor among several processors, a semiconductor based microprocessor (in the form of a microchip), a macroprocessor, one or more application specific integrated circuits (ASICs), a plurality of suitably configured digital logic gates, and/or other well-known electrical configurations comprising discrete elements both individually and in various combinations to coordinate the overall operation of the controller 106.

The I/O interfaces 120 provide one or more interfaces to the network 110, as well as interfaces for access to one or more computer readable mediums, such as memory drives, which includes an optical, magnetic, or semiconductor-based drive. The I/O interfaces 120 may comprise any number of interfaces for the input and output of signals (e.g., analog or digital data) for conveyance over the network 110. The input may comprise input by an operator (local or remote) through a keyboard or mouse or other input device (or audible input in some embodiments), and input from signals carrying information from one or more of the components of the control system 100.

The display device 122 comprises one of a variety of types of displays, including liquid crystal diode (LCD), plasma, among others, that provide an outputted GUI to the operator as indicated above. In some embodiments, the display device 122 may be a headset-type display with or without an audio component. In some embodiments, the display device 122 may be accessed by the processing unit 118 via the network 110. The display device or other displays may display the crop yield maps, crop height maps, geo-located crop information, and other information and data described herein.

When certain embodiments of the controller 106 are implemented at least in part as software (including firmware), the software can be stored on a variety of non-transitory computer-readable medium for use by, or in connection with, a variety of computer-related systems or methods. In the context of this document, a computer-readable medium may comprise an electronic, magnetic, optical, or other physical device or apparatus that may contain or store a computer program (e.g., executable code or instructions) for use by or in connection with a computer-related system or method. The software may be embedded in a variety of computer-readable mediums for use by, or in connection with, an instruction execution system, apparatus, or device, such as a computer-based system, processor-containing system, or other system that can fetch the instructions from the instruction execution system, apparatus, or device and execute the instructions.

When certain embodiment of the controller 106 are implemented at least in part as hardware, such functionality may be implemented with any or a combination of the following technologies, which are all well-known in the art: a discreet logic circuit(s) having logic gates for implementing logic functions upon data signals, an application specific integrated circuit (ASIC) having appropriate combinational logic gates, a programmable gate array(s) (PGA), a field programmable gate array (FPGA), etc.

Each software module may comprise an ordered listing of executable instructions for implementing logical functions and can be embodied in any computer-readable medium for use by or in connection with an instruction execution system, apparatus, or device, such as a computer-based system, processor-containing system, or other system that can fetch the instructions from the instruction execution system, apparatus, or device, and execute the instructions. In the context of this application, a "computer-readable medium" can be any means that can contain, store, communicate, propagate or transport the program for use by or in connection with the instruction execution system, apparatus, or device including, but not limited to, the memory 124.

Some or all of the components of the system 100 may be enclosed in or supported on a weatherproof housing for protection from moisture, vibration, and impact. The housing may be positioned anywhere on the combine and may be constructed from a suitable vibration and impact-resistant material such as, for example, plastic, nylon, aluminum, or any combination thereof and may include one or more appropriate gaskets or seals to make it substantially waterproof or resistant.

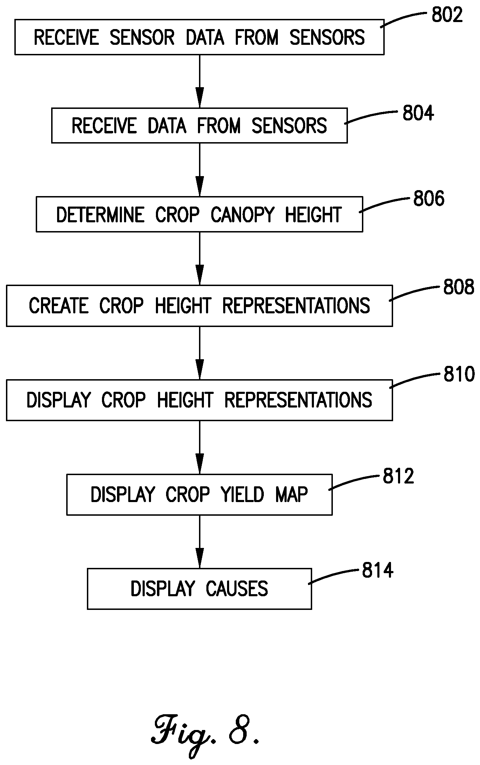

The above-described control system 100, equipment 200, and/or other computer equipment may implement methods for augmenting crop yield information with crop height information. The flow chart of Fig. 8 shows the functionality and operation of exemplary implementations of the methods in more detail. In this regard, some of the blocks of the flow chart may represent method steps and/or a module segment or portion of code of the computer programs of the present invention which comprises one or more executable instructions for implementing the specified logical function or functions. In some alternative implementations, the functions noted in the various blocks may occur out of the order depicted in Fig. 8. For example, two blocks shown in succession in Fig. 8 may in fact be executed substantially concurrently, or the blocks may sometimes be executed in the reverse order depending upon the functionality involved.

As shown in block 802, the controller 106 receives sensor data from the sensors 102, 104 while the agricultural machine is operating. As shown in block 804, the controller may also receive data from other sensors or devices such as the positioning system 114. Then, as depicted in block 806, the controller 106 calculates the height of the crop in front of the machine based on the sensor data and any other received data. Next, as depicted by step 808, the controller 106 and/or the server computer 202 creates geo-located crop height information, crop height maps, or other data representative of the crop height. The controller then displays the crop height representations on the display 122 or another display device as shown in block 810 and displays a crop yield map as depicted in block 812. The controller may also predict and display representations of causes of crop yield variations over the maps as depicted in block 814. As the agricultural machine moves through crop in a field, these steps are continuously or periodically repeated. In some embodiments of the invention, the controller may also send data to the remote equipment 200 or other components of the harvester to display the detected crop canopy height and/or use the detected crop canopy height to control other functions of the agricultural machine such as raising or lowering the header. The equipment 200 may also perform functions of the controller 106.

Other methods of the invention comprise receiving in a processing unit crop height signals from a sensor that senses a height of a crop to be harvested by an agricultural machine and determining a height of the crop based on the crop height signals; receiving in the processing unit location information for locations of the agricultural machine as it operates in an agricultural field; and generating with the processing unit geo-located crop height information that represents the height of the crop at different locations in the field. In some embodiments, the geo-located crop height information includes a crop height map that represents the height of the crop at different locations in the field.

Other methods may further comprise receiving in the processing unit a crop yield map that represents crop yields at different locations in the field and displaying the crop height map and the crop yield map. In some embodiments, the crop height map may be superimposed over at least a portion of the crop yield map so that an operator can compare displayed crop yield data and crop height data for the same geographic areas in the field.

Methods of the invention may further comprise predicting, with the processing unit, causes of crop yield variation in the field based on the crop height information, the location information, and the crop yield map. Representations of these causes may then be displayed over at least a portion of the crop yield map.

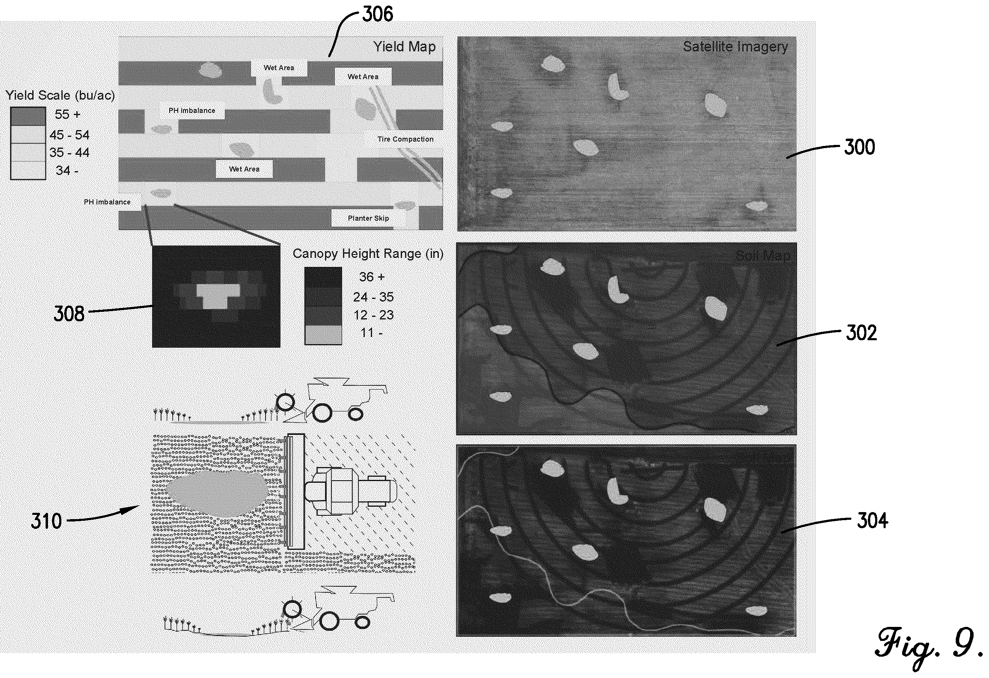

Fig. 9 shows several exemplary maps and data representations that may be created and displayed by the present invention. The maps may include a satellite imagery map 300; soil maps 302, 304; a crop yield map 306; a crop height map 308 adjacent to or superimposed over the crop yield map; and representations of the agricultural machine traversing a field shown by the maps. Detected causes of crop yield variation, such as "wet area", "Tire Compaction", "Planter Skip", and "PH Imbalance" may be displayed on the maps.

### ADDITIONAL CONSIDERATIONS

The detailed description of the technology references the accompanying drawings that illustrate specific embodiments in which the technology can be practiced. The embodiments are intended to describe aspects of the technology in sufficient detail to enable those skilled in the art to practice the technology. Other embodiments can be utilized, and changes can be made without departing from the scope of the current invention. The detailed description is, therefore, not to be taken in a limiting sense. The scope of the current invention is defined only by the appended claims, along with the full scope of equivalents to which such claims are entitled.

Throughout this specification, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments but is not necessarily included. Thus, the current invention can include a variety of combinations and/or integrations of the embodiments described herein.

Although the present application sets forth a detailed description of numerous different embodiments, it should be understood that the legal scope of the description is defined by the words of the claims set forth at the end of this patent and equivalents. The detailed description is to be construed as exemplary only and does not describe every possible embodiment since describing every possible embodiment would be impractical. Numerous alternative embodiments may be implemented, using either current technology or technology developed after the filing date of this patent, which would still fall within the scope of the claims.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as computer hardware that operates to perform certain operations as described herein.

In various embodiments, computer hardware, such as a processing element, may be implemented as special purpose or as general purpose. For example, the processing element may comprise dedicated circuitry or logic that is permanently configured, such as an application-specific integrated circuit (ASIC), or indefinitely configured, such as an FPGA, to perform certain operations. The processing element may also comprise programmable logic or circuitry (e.g., as encompassed within a general-purpose processor or other programmable processor) that is temporarily configured by software to perform certain operations. It will be appreciated that the decision to implement the processing element as special purpose, in dedicated and permanently configured circuitry, or as general purpose (e.g., configured by software) may be driven by cost and time considerations.

Accordingly, the terms "processing unit", "processing element", or equivalents should be understood to encompass a tangible entity, be that an entity that is physically constructed, permanently configured (e.g., hardwired), or temporarily configured (e.g., programmed) to operate in a certain manner or to perform certain operations described herein. Considering embodiments in which the processing element is temporarily configured (e.g., programmed), each of the processing elements need not be configured or instantiated at any one instance in time. For example, where the processing element comprises a general-purpose processor configured using software, the general-purpose processor may be configured as respective different processing elements at different times. Software may accordingly configure the processing element to constitute a particular hardware configuration at one instance of time and to constitute a different hardware configuration at a different instance of time.

Computer hardware components, such as communication elements, memory elements, processing elements, and the like, may provide information to, and receive information from, other computer hardware components. Accordingly, the described computer hardware components may be regarded as being communicatively coupled. Where multiple of such computer hardware components exist contemporaneously, communications may be achieved through signal transmission (e.g., over appropriate circuits and buses) that connect the computer hardware components. In embodiments in which multiple computer hardware components are configured or instantiated at different times, communications between such computer hardware components may be achieved, for example, through the storage and retrieval of information in memory structures to which the multiple computer hardware components have access. For example, one computer hardware component may perform an operation and store the output of that operation in a memory device to which it is communicatively coupled. A further computer hardware component may then, at a later time, access the memory device to retrieve and process the stored output. Computer hardware components may also initiate communications with input or output devices, and may operate on a resource (e.g., a collection of information).

The various operations of example methods described herein may be performed, at least partially, by one or more processing elements that are temporarily configured (e.g., by software) or permanently configured to perform the relevant operations. Whether temporarily or permanently configured, such processing elements may constitute processing element-implemented modules that operate to perform one or more operations or functions. The modules referred to herein may, in some example embodiments, comprise processing element-implemented modules.

Similarly, the methods or routines described herein may be at least partially processing element implemented. For example, at least some of the operations of a method may be performed by one or more processing elements or processing element-implemented hardware modules. The performance of certain of the operations may be distributed among the one or more processing elements, not only residing within a single machine, but deployed across a number of machines. In some example embodiments, the processing elements may be located in a single location (e.g., within a home environment, an office environment or as a server farm), while in other embodiments the processing elements may be distributed across a number of locations.

Unless specifically stated otherwise, discussions herein using words such as "processing," "computing," "calculating," "determining," "presenting," "displaying," or the like may refer to actions or processes of a machine (e.g., a computer with a processing element and other computer hardware components) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

The patent claims at the end of this patent application are not intended to be construed under 35 U.S.C. § 112(f) unless traditional means-plus-function language is expressly recited, such as "means for" or "step for" language being explicitly recited in the claim(s).

Although the technology has been described with reference to the embodiments illustrated in the attached drawing figures, it is noted that equivalents may be employed and substitutions made herein without departing from the scope of the technology as recited in the claims.

Having thus described various embodiments of the technology, what is claimed as new and desired to be protected by Letters Patent includes the following:

## Claims

1. A method for augmenting crop yield information with crop height information, the method comprising:
receiving in a processing unit crop height signals from a sensor that senses a height of a crop to be harvested by an agricultural machine;
determining with the processing unit a height of the crop based on the crop height signals;
receiving in the processing unit location information representative of locations of the agricultural machine;
generating with the processing unit geo-located crop height information from the height of the crop and the location information; and
displaying representations of the geo-located crop height information.

2. The method of claim 1, wherein the geo-located crop height information includes a crop height map that represents the height of the crop at different locations in a field traversed by the agricultural machine.

3. The method of claim 2, further comprising: receiving in the processing unit a crop yield map that represents crop yields at different locations in the field traversed by the agricultural machine; and displaying, on a display controlled by the processing unit, the crop height map and the crop yield map.

4. The method of claim 3, further comprising displaying, on a display controlled by the processing unit, at least a portion of the crop height map superimposed over at least a portion of the crop yield map.

5. The method of claim 3, further comprising: predicting, with the processing unit, causes of crop yield variation based on the crop height information, the location information, and the crop yield map; and displaying, on a display controlled by the processing unit, representations of the causes of crop yield variation over at least a portion of the crop yield map.

6. The method of claim 1, wherein the sensor is selected from the group consisting of a radar sensor, a lidar sensor, and an ultrasonic sensor.

7. The method of claim 1, wherein the sensor comprises a plurality of contact sensors mounted to the agricultural machine, each contact sensor operable to detect physical contact with the crop to be harvested by the agricultural machine and to generate a corresponding crop contact signal.

8. The method of claim 7, wherein the agricultural machine is a combine having a rotatable reel with a plurality of rotatable tines, and wherein the contact sensors are mounted to some of the rotatable tines.

9. The method of claim 8, wherein the contact sensors are hall effect tactile sensors.

10. The method of claim 9, wherein the contact sensors detect deflection of the rotatable tines caused by contact with the crop.

11. The method of claim 8, wherein the rotatable reel has a plurality of independently movable reel sections each with a plurality of rotatable tines, and wherein at least one of the contact sensors is mounted to each of the independently movable reel sections to detect physical contact with the crop in front of each of the reel sections.

12. A combine harvester for harvesting a crop, the combine harvester comprising:
a wheeled frame having a front end;
a cutting header positioned on the front end for cutting the crop, the cutting header comprising:
a cutting element; and
a rotatable reel having a plurality of rotatable tines for controlling movement of the crop toward the cutting element;
a plurality of sensors mounted to the harvester and operable to sense a height of crop in front of the harvester and generate sensor signals;
a location-determining component for determining locations of the harvester as it harvests the crops and generating corresponding location information; and
a processing unit that receives the sensor signals from the sensors, receives the location information from the location-determining component, determines a height of the crop based on the sensor signals, and generates geo-located crop height information that represents the height of the crop and the location information.

13. The combine harvester as set forth in claim 12, the geo-located crop height information includes a crop height map that represents the height of the crop at different locations in a field traversed by the agricultural machine.

14. The combine harvester as set forth in claim 12, wherein the processing unit receives a crop yield map that represents crop yields at different locations in the field traversed by the agricultural machine.

15. The combine harvester as set forth in claim 14, wherein the processing unit displays the crop height map and the crop yield map on a display.
